(19) Europäisches Patentamt
European Patent Office
Office européen des brevets

(11) EP 3 896 113 A1

(12) EUROPEAN PATENT APPLICATION
published in accordance with Art. 153(4) EPC

(43) Date of publication:
**20.10.2021 Bulletin 2021/42**

(21) Application number: **19896411.6**

(22) Date of filing: **12.12.2019**

(51) Int Cl.:
***C08G 69/36*** *(2006.01)*

(86) International application number:
**PCT/JP2019/048666**

(87) International publication number:
**WO 2020/122170 (18.06.2020 Gazette 2020/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.12.2018 JP 2018234551**

(71) Applicant: **TOYOBO CO., LTD.**
**Osaka-shi**
**Osaka 530-8230 (JP)**

(72) Inventors:
- **HATANAKA Yosuke**
**Tsuruga-shi, Fukui 914-8550 (JP)**
- **HAYASHI Syo**
**Tsuruga-shi, Fukui 914-8550 (JP)**
- **TAMATSUSHIMA Makoto**
**Otsu-shi, Shiga 520-0292 (JP)**

(74) Representative: **Vossius & Partner**
**Patentanwälte Rechtsanwälte mbB**
**Siebertstraße 3**
**81675 München (DE)**

# (54) SEMI-AROMATIC POLYAMIDE RESIN AND METHOD FOR MANUFACTURING SAME

(57) The present invention provides a semi-aromatic polyamide resin which is excellent in heat resistance and heat discoloration resistance, which can suppress a mold staining due to outgassing during melt molding, and which is excellent in melt fluidity, gelation characteristics and mechanical properties, wherein the semi-aromatic polyamide resin contains a constituent unit obtained from hexamethylenediamine and terephthalic acid and a constituent unit obtained from 11-aminoundecanoic acid or undecane lactam, wherein a relative viscosity (RV) of the semi-aromatic polyamide resin is within a range of 2.65 to 3.50, and wherein a relationship among a concentration of terminal amino groups (AEG), a concentration of terminal carboxyl groups (CEG) and a concentration of terminal amino groups blocked by a monocarboxylic acid (EC) satisfies the specific formulae.

EP 3 896 113 A1

## Description

### Technical Field

The present invention relates to a semi-aromatic polyamide resin which is excellent in heat resistance and heat discoloration resistance, which can suppress a mold staining due to outgassing during melt molding, which is excellent in melt fluidity and gelation characteristics, and which is suitable for a resin composition for molded products such as car parts, bicycle parts and electric/electronic parts.

### Background Art

Among thermoplastic resins, a polyamide resin has been used as clothing, fiber for industrial materials, engineering plastics, etc. due to its excellent characteristic properties and easiness in melt molding. Particularly in the engineering plastics, a polyamide resin has been used in many applications not only as car parts and industrial machine parts but also as various industrial parts, cabinet parts, electric/electronic parts, etc.

As to a polyamide resin being conventionally used for engineering plastics and the like, 6T Nylon which is constituted from hexamethylenediamine (6) and terephthalic acid (T) has been widely known. For example, a copolymerized polyamide resin prepared from an equimolar salt of hexamethylenediamine with terephthalic acid and 11-aminoundecanoic acid has been proposed. This copolymerized polyamide has heat resistance and low water absorption property and is excellent in stability in surface mounting. In addition, this copolymerized polyamide has a glass transition temperature of 90°C, whereby injection molding at a relatively low metal mold temperature is possible, and high molding ability is achieved. However, in this copolymerized polyamide, its color tone is apt to change during production steps or under environment during use. Therefore, there is yet a room for improvement in terms of color tone stability of the resin caused by external factors. In addition, the above-mentioned various semi-aromatic polyamide resins have higher melting points as compared with aliphatic polyamide resins, whereby they are inferior in melt fluidity, and are apt to become viscous and be gelled during melt retention. Accordingly, there is yet a room for improvement in terms of processing stability and high fluidity (for example, please see Patent Document 1).

On the other hand, in order to solve the problems such as color tone instability and gelation of the resin caused by the external factors, there has been also proposed a semi-aromatic polyamide resin suitable for a resin composition for molded products such as car parts, electric/electronic parts, etc. which can achieve excellent melt fluidity and color tone stability in addition to high melting point of not lower than 290°C and low water absorption property, by means of adjusting a resin composition, melt viscosity, relative viscosity and terminal group concentration (for example, please see Patent Document 2).

In addition, in order to solve the problems such as color tone instability and gelation of the resin, there have been proposed a polyamide and a polyamide composition comprising the same wherein thermal stability during drying and molding is good, color tone does not become bad even if the polyamide resin is used in a manner mixed with recycled product, generation of foreign matters such as gelled product is small, and productivity in molding is excellent, by means of allowing reductive phosphorus compound species to remain in the resin (for example, please see Patent Document 3).

In those proposals, although improvements have been done in terms of color tone stability and gelation, there are still problems in such a respect that a mold is stained due to a gas generated during melt molding whereby the productivity becomes bad.

### Prior Art Documents

### Patent Documents

Patent Document 1: WO 2011/052464
Patent Document 2: WO 2017/077901
Patent Document 3: Japanese Patent Application Laid-Open (JP-A) No. 2007-92053

### Disclosure of the Invention

### Problem that the Invention is to Solve

The present invention has been achieved based on the problem in the prior art as such. Thus, an object of the present invention is to provide a semi-aromatic polyamide resin which is excellent in heat resistance and heat discoloration

resistance, which can suppress a mold staining due to outgassing during melt molding, and which is excellent in melt fluidity and gelation characteristics. During review for solving this problem, there became a demand for a semi-aromatic polyamide resin which is excellent in mechanical properties, in addition to the above properties. The present invention also aims to solve this new problem.

Means for Solving the Problem

As a result of extensive investigations, the inventors of the present application have found that the above problem can be solved by the following means, and achieved the present invention.

Thus, the present invention comprises the following constitutions.

[1] A semi-aromatic polyamide resin wherein the resin contains a constituent unit obtained from hexamethylenediamine and terephthalic acid and a constituent unit obtained from 11-aminoundecanoic acid or undecane lactam, wherein a relative viscosity (RV) of the semi-aromatic polyamide resin is within a range of the following formula (I), and wherein a relationship among a concentration of terminal amino groups (AEG), a concentration of terminal carboxyl groups (CEG) and a concentration of terminal amino groups blocked by a monocarboxylic acid (EC) satisfies the following formulae (II) to (IV).

$$2.65 \leq RV \leq 3.50 \ldots (I)$$

$$10\ eq/t \leq AEG + CEG \leq 110\ eq/t \ldots (II)$$

$$0.25 \leq (AEG + CEG) / (AEG + CEG + EC) \leq 0.75 \ldots (III)$$

$$0.1 \leq AEG/CEG \leq 3.5 \ldots (IV)$$

[2] The semi-aromatic polyamide resin according to [1], wherein the constituent unit obtained from hexamethylenediamine and terephthalic acid occupies 50 to 75% by mole, and the constituent unit obtained from 11-aminoundecanoic acid or undecane lactam occupies 50 to 25% by mole, and wherein a melting point of the semi-aromatic polyamide resin is 270 to 330°C.

[3] The semi-aromatic polyamide resin according to [1] or [2], wherein a sum (P3) of an amount of phosphorus atoms derived from phosphorus compounds detected in the semi-aromatic polyamide resin as having a structure represented by the following structural formula (P1) or (P2) is 30 ppm or more, and wherein a percentage of P3 to an amount of total phosphorus atoms remaining in the semi-aromatic polyamide resin is 10% or more.

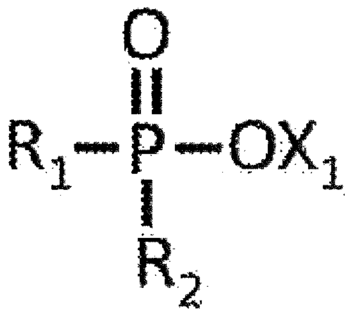

• • • (P1)

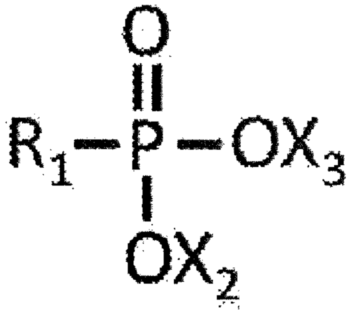

(P2)

(In the formulae, $R_1$ and $R_2$ each is hydrogen, alkyl group, aryl group, cycloalkyl group or arylalkyl group; $X_1$, $X_2$ and $X_3$ each is hydrogen, alkyl group, aryl group, cycloalkyl group, arylalkyl group, alkali metal or alkali earth metal; and one member among $X_1$,$X_2$ and $X_3$ and one member between $R_1$ and $R_2$ in the formulae may be bonded with each other to form a ring structure.)

[4] The semi-aromatic polyamide resin according to any of [1] to [3], wherein an amount of gas (outgassing) generated when the semi-aromatic polyamide resin is thermally decomposed at 330°C for 20 minutes is 500 ppm or less.

[5] A method for producing the semi-aromatic polyamide resin mentioned in any of [1] to [4], comprising the steps of:

preparing an aqueous solution of raw materials constituting the semi-aromatic polyamide resin;
continuously introducing the aqueous solution of the raw materials into a tubular reactor (raw material introduction step);
allowing the introduced raw materials to pass through the tubular reactor to conduct an amidation whereby a reaction mixture containing an amidation product and condensed water is obtained (amidation step);
conducting a melt polymerization by introducing the reaction mixture into a continuous reactor which allows a separation and removal of water; and
conducting a solid phase polymerization *in vacuo* or in a nitrogen stream.

Advantages of the Invention

According to the present invention, it is possible to provide a semi-aromatic polyamide resin which is excellent in heat resistance and heat discoloration resistance, which can suppress a mold staining due to outgassing during melt molding, and which is excellent in melt fluidity and gelation characteristics, as well as mechanical properties.

Brief Description of the Drawings

Fig. 1 is a schematic view which shows a shape of a test piece for evaluating weld strength conducted in Examples.

Best Mode for Carrying Out the Invention

As hereunder, the present invention will be illustrated in detail.

In the present invention, "semi-aromatic polyamide resin" contains a polymerization catalyst compound which will be mentioned later. It may be said to be a kind of "composition" because it contains a thing other than a chemical substance which is "semi-aromatic polyamide". However, since an amount of the polymerization catalyst compound is very small, such composition is expressed as "semi-aromatic polyamide resin" in the present invention. Incidentally, even when a chemical substance called "semi-aromatic polyamide" is explained, it may be sometimes referred to as "semi-aromatic polyamide resin".

In the present invention, the semi-aromatic polyamide resin contains a constituent unit obtained from hexamethylenediamine and terephthalic acid (hereinafter, it may be sometimes referred to as a 6T-unit) and a constituent unit obtained from 11-aminoundecanoic acid or undecane lactam (hereinafter, it may be sometimes referred to as an 11-unit) . Although there is no particular limitation for a ratio of the 6T-unit to the 11-unit in the semi-aromatic polyamide resin, it is desirable that the 6T-unit occupies 45 to 85% by mole and the 11-unit occupies 55 to 15% by mole.

In the semi-aromatic polyamide resin, it is preferred that the 6T-unit occupies 50 to 75% by mole and the 11-unit occupies 50 to 25% by mole. It is more preferred that the 6T-unit occupies 60 to 70% by mole and the 11-unit occupies 40 to 30% by mole. It is further preferred that the 6T-unit occupies 62 to 68% by mole and the 11-unit occupies 38 to 32% by mole. When the 6T-unit occupies 50% by mole or more, crystallinity and mechanical properties tend to

increase. When the 6T-unit occupies 75% by mole or less, melting point of the semi-aromatic polyamide resin becomes lower than 330°C, whereby a processing temperature being necessary for molding the semi-aromatic polyamide composition by injection molding or the like does not become too high. Accordingly, the semi-aromatic polyamide composition may be prevented from being decomposed during processing, and thus aimed physical properties and appearance may be satisfied. In addition, increase in a concentration of amide bonds can be suppressed, which is preferred in view of water absorption property of the molded product as well.

The semi-aromatic polyamide resin may also be copolymerized with a copolymerizable ingredient other than the 6T-unit and the 11-unit.

As to the copolymerizable diamine ingredient, there are exemplified an aliphatic diamine such as 1,2-ethylenediamine, 1,3-trimethylenediamine, 1,4-tetramethylenediamine, 1,5-pentamethylenediamine, 2-methyl-1,5-pentamethylenediamine, 1,7-heptamethylenediamine, 1,8-octamethylenediamine, 1,9-nonamethylenediamine, 2-methyl-1,8-octamethylenediamine, 1,10-decamethylenediamine, 1,11-undecamethylenediamine, 1,12-dodecamethylenediamine, 1,13-tridecamethylenediamine, 1,16-hexadecamethylenediamine, 1,18-octadecamethylenediamine and 2,2,4(or 2,4,4)-trimethylhexamethylenediamine; an alicyclic diamine such as piperazine, cyclohexanediamine, bis(3-methyl-4-aminohexyl)-methane, bis(4,4'-aminocyclohexyl)methane and isophoronediamine; an aromatic diamine such as m-xylylenediamine, p-xylylenediamine, p-phenylenediamine and m-phenylenediamine; and hydrogenated products thereof. Each of them may be used solely or a plurality thereof may be used jointly.

As to the copolymerizable dicarboxylic acid ingredient, there are exemplified an aromatic dicarboxylic acid such as isophthalic acid, orthophthalic acid, 1,5-naphthalenedicarboxylic acid, 2,6-naphthalenedicarboxylic acid, 4,4'-diphenyldicarboxylic acid, 2,2'-diphenyldicarboxylic acid, 4,4'-diphenyl ether dicarboxylic acid, 5-(sodium sulfonate)-isophthalic acid and 5-hydroxyisophthalic acid; and an aliphatic or alicyclic dicarboxylic acid such as fumaric acid, maleic acid, succinic acid, itaconic acid, adipic acid, azelaic acid, sebacic acid, 1,11-undecanedioic acid, 1,12-dodecanedioic acid, 1,14-tetradecanedioic acid, 1,18-octadecanedioic acid, 1,4-cyclohexanedicarboxylic acid, 1,3-cyclohexanedicarboxylic acid, 1,2-cyclohexanedicarboxylic acid, 4-methyl-1,2-cyclohexanedicarboxylic acid and dimer acid. There are also exemplified a lactam and an aminocarboxylic acid wherein a ring of the lactam is opened such as ε-caprolactam, 12-aminododecanoic acid and 12-lauryllactam.

Generally speaking, in the polyamide resin, a total number of terminals which is a sum of a concentration of terminal amino groups (AEG), a concentration of terminal carboxyl groups (CEG) and a concentration of terminals blocked by a monocarboxylic acid or/and a monoamine (EC) is correlated with a relative viscosity (RV). As a result of various investigations, the inventors have found that, when the above formula (I) is satisfied and the range shown by the formulae (II) to (IV) are satisfied, it is possible to obtain a semi-aromatic polyamide resin which is excellent in heat resistance and heat discoloration resistance, which can suppress a mold staining due to outgassing during melt molding, and which is excellent in melt fluidity and gelation characteristics as well as mechanical properties. In the present invention, EC stands for a concentration of terminal amino groups blocked by a monocarboxylic acid.

Incidentally, for the sake of convenience, the terminal amino group, the terminal carboxyl group and the terminal blocked by a monocarboxylic acid or/and a monoamine may also be referred to as AEG, CEG and EC, respectively.

(AEG + CEG) in the semi-aromatic polyamide resin of the present invention is 10 to 110 eq/t, preferably 20 to 100 eq/t and more preferably 30 to 90 eq/t. When (AEG + CEG) is 10 eq/t or more, terminal groups which can react remain, and thus it is possible to thicken to a level of the RV which can ensure the mechanical strength of a molded product. Further, when (AEG + CEG) is 110 eq/t or less, thickening does not happen in the melt molding and gelation does not happen accordingly.

(AEG + CEG) / (AEG + CEG + EC) in the semi-aromatic polyamide resin of the present invention is 0.25 to 0.75, preferably 0.30 to 0.70 and more preferably 0.35 to 0.65. When (AEG + CEG) / (AEG + CEG + EC) is 0.75 or less, thickening does not happen in the melt molding and gelation does not happen accordingly. As a result, coloration reaction due to heat can be suppressed. When (AEG + CEG)/(AEG + CEG + EC) is 0.25 or more, a proper amount of reactive terminal groups remain in relation to an amount of the blocked terminals. Accordingly, lowering in viscosity can be suppressed during the melt molding, which leads to satisfactory mechanical properties of the molded product. When it is important to increase the mechanical properties of the molded product obtained from the semi-aromatic polyamide resin, it is preferable that (AEG + CEG)/(AEG + CEG + EC) is 0.50 or more.

(AEG/CEG) in the semi-aromatic polyamide resin of the present invention is 0.1 to 3.5, preferably 0.3 to 2.5 and more preferably 0.5 to 1.5. It is usual in a polyamide resin that thickening proceeds by a reaction of terminal amino group with terminal carboxyl group. However, thickening sometimes happens when CEG reacts with EC. When AEG becomes absent (becomes zero) during a course of progress of amidation reaction, terminals of the semi-aromatic polyamide resin become CEG and EC. Since there is no AEG there, CEG attacks an amide bond part formed by the terminal blocking agent due to an acid catalyst effect of CEG whereupon a transamidation reaction takes place. At that time, the thickening reaction proceeds together with distilling the terminal blocking agent to an outside of a reaction system. Therefore, an outgassing ingredient derived from the terminal blocking agent increases. Moreover, coloring reaction happens due to an acid ingredient of CEG resulting in a resin which is inferior in the color tone stability. Also,

when (AEG/CEG) is more than 3.5, an abundant amount of AEG remains, and thus the coloration reaction due to heat is apt to happen. In order to avoid such a phenomenon, it is also important to satisfy the formulae (II), (III), and (IV) .

Although it is sufficient that AEG, CEG and EC satisfy the above-mentioned relationship, preferred range for each of them is as follows. For AEG, it is preferred to be 10 to 80 eq/t and more preferred to be 15 to 60 eq/t. For CEG, it is preferred to be 10 to 80 eq/t and more preferred to be 15 to 60 eq/t. For EC, it is preferred to be 40 to 120 eq/t, more preferred to be 50 to 110 eq/t and further preferred to be 60 to 100 eq/t.

Relative viscosity (RV) of the semi-aromatic polyamide resin of the present invention is 2.65 to 3.50, preferably 2.70 to 3.40 and more preferably 2.75 to 3.35. When the RV is 2.65 or more, it is possible to achieve satisfactory mechanical strength of the molded product. When the RV is 3.50 or less, fluidity during the melt molding becomes high and that is preferred in view of melt processability.

In the semi-aromatic polyamide resin of the present invention, an amount of gas (outgassing) generated when the semi-aromatic polyamide resin is thermally decomposed at 330°C for 20 minutes is 500 ppm or less. Measurement of the outgassing is conducted by a method mentioned under the item of Examples which will be mentioned later. As a result of setting the above-mentioned specific terminal concentration and RV, a semi-aromatic polyamide resin which exhibits low outgassing can be obtained. The outgassing is preferred to be 450 ppm or less, more preferred to be 400 ppm or less and further preferred to be 350 ppm or less. Although a lower limit of the outgassing is preferred to be 0 ppm, it is about 250 ppm in the semi-aromatic polyamide resin of the present invention.

When the outgassing of the semi-aromatic polyamide resin of the present invention is within the above range, suppression of the mold staining during the melt molding is possible and production for long time is possible.

Regarding the semi-aromatic polyamide resin of the present invention, a sum (P3) of an amount of phosphorus atoms derived from phosphorus compounds detected in the semi-aromatic polyamide resin as having a structure represented by the following structural formula (P1) or (P2) is preferably 30 ppm or more, and a percentage of P3 to an amount of total phosphorus atoms remaining in the semi-aromatic polyamide resin is preferably 10% or more. The phosphorus atom is derived from the phosphorus compound used as a catalyst. P3 is more preferably 40 ppm or more and furthermore preferably 50 ppm or more. When P3 is 30 ppm or more, generation of a peroxide by thermal oxidative deterioration can be suppressed whereby it is possible to suppress the coloring in yellow under a high-temperature air. In addition, it is possible to suppress the gelation of the resulting resin due to the peroxide generated by the thermal oxidative deterioration.

When the percentage of P3 to the amount of total residual phosphorus atoms is less than 10%, it means that thermal damage is resulted by the thermal history during polymerization or that oxidative deterioration proceeds by a reaction with residual oxygen in a polymerization system whereby the resulting resin is apt to be colored and gelled. Although an upper limit of the percentage of P3 to the amount of total residual phosphorus atoms is not particularly defined, it is about 50% in the present invention.

When oxygen concentration in a storage layer is limited to be 10 ppm or less, the polymerization is conducted at a low temperature in a polycondensation step so as to obtain a low-degree condensate, and then the obtained low-degree condensate is subjected to a solid phase polymerization with small thermal history so as to adjust the viscosity to a predetermined level, it is now possible to achieve P3 of 30 ppm or more and to achieve the percentage of P3 to the amount of total residual phosphorus atoms of 10% or more.

In order to achieve P3 to the amount of total residual phosphorus atoms of 30 ppm or more, it is preferred that the amount of total phosphorus atoms remaining in the semi-aromatic polyamide resin is 200 to 400 ppm.

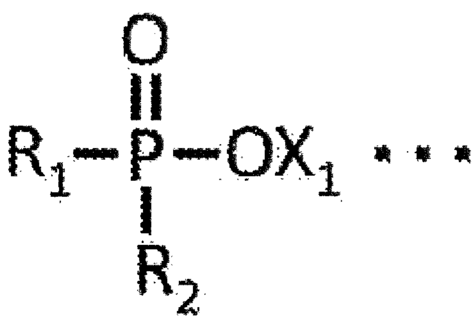

• • • (P1)

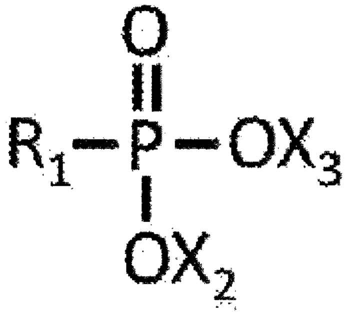 ···(P2)

(In the formulae, $R_1$ and $R_2$ each is hydrogen, alkyl group, aryl group, cycloalkyl group or arylalkyl group; $X_1$, $X_2$ and $X_3$ each is hydrogen, alkyl group, aryl group, cycloalkyl group, arylalkyl group, alkali metal or alkali earth metal; and one member among $X_1$,$X_2$ and $X_3$ and one member between $R_1$ and $R_2$ in the formulae may be bonded with each other to form a ring structure.)

The phosphorus compound to be used as a catalyst will be explained later. When sodium hypophosphite is used as the catalyst, $R_1$ and $R_2$ each is hydrogen and $X_1$,$X_2$ and $X_3$ each is hydrogen or sodium.

When the amount of P3 contained in the semi-aromatic polyamide resin of the present invention is within the above range, ΔCo-b before and after the thermal treatment at 260°C for 10 minutes in the air can be suppressed to be 10 or less. It is also possible to obtain a semi-aromatic polyamide which exhibits a gelling time of 2 hours or longer by the thermal treatment at 330°C in a nitrogen stream. The ΔCo-b and gelling time are measured by the methods described in the item of Examples which will be mentioned later.

As to the method for producing the semi-aromatic polyamide resin of the present invention, the method comprises the steps of: preparing an aqueous solution of raw materials constituting the semi-aromatic polyamide resin; continuously introducing the aqueous solution of the raw materials into a tubular reactor (raw material introduction step) ; allowing the introduced raw materials to pass through the tubular reactor to conduct an amidation whereby a reaction mixture containing an amidation product and condensed water is obtained (amidation step); conducting a melt polymerization by introducing the reaction mixture into a continuous reactor which allows a separation and removal of water; and conducting a solid phase polymerization *in vacuo* or in a nitrogen stream.

(1) Preparation step

Hexamethylenediamine, terephthalic acid and 11-aminoundecanoic acid or undecane lactam in predetermined amounts are charged into an autoclave. At the same time, water is added thereto so as to make a concentration of the raw materials 30 to 90% by weight. Then, a phosphorus compound as a polymerization catalyst and a monocarboxylic acid as a terminal blocking agent are charged thereto. Further, when foaming is expected to happen in the latter steps, a foaming suppressor is added thereto.

As to the catalyst used for the producing the semi-aromatic polyamide of the present invention, there are compounds such as dimethylphosphinic acid, phenylmethyl phosphinic acid, hypophosphorous acid, ethyl hypophosphite and phosphorous acid as well as hydrolysates and condensates thereof. There are also exemplified metal salts, ammonium salts and esters thereof. As to the metal for the metal salts, specific examples are potassium, sodium, magnesium, vanadium, calcium, zinc, cobalt, manganese, tin, tungsten, germanium, titanium and antimony. As to the ester, there may be used ethyl ester, isopropyl ester, butyl ester, hexyl ester, isodecyl ester, octadecyl ester, decyl ester, stearyl ester, phenyl ester, etc. In the present invention, sodium hypophosphite is preferred as the catalyst. Further, in view of enhancement of melt retention stability, it is preferred to add sodium hydroxide.

As to a stage for adding the terminal blocking agent, a stage of charging the raw materials is preferred though it may be an initial stage of polymerization, a latter stage of polymerization or a final stage of polymerization. As to the terminal blocking agent, although there is no particular limitation as far as it is a monofunctional compound capable of reacting with amino group or carboxyl group in the polyamide terminal, there may be used monocarboxylic acid or monoamine, acid anhydride such as phthalic anhydride, monoisocyanate, monoacid halide, monoester, monoalcohol, etc. As to the terminal blocking agent, there are exemplified an aliphatic monocarboxylic acid (such as acetic acid, propionic acid, butyric acid, valeric acid, caproic acid, caprylic acid, laurylic acid, tridecanoic acid, myristic acid, palmitic acid, stearic acid, pivalic acid and isobutyric acid), an alicyclic monocarboxylic acid (such as cyclohexanecarboxylic acid), an aromatic monocarboxylic acid (such as benzoic acid, toluic acid, α-naphthalenecarboxylic acid, β-naphthalenecarboxylic acid, methylnaphthalenecarboxylic acid and phenylacetic acid), an acid anhydride (such as maleic anhydride, phthalic anhydride and hexahydrophthalic anhydride), an aliphatic monoamine (such as methylamine, ethylamine, propylamine, butylamine, hexylamine, octylamine, decylamine, stearylamine, dimethylamine, diethylamine, dipropylamine and dibutylamine), an alicyclic monoamine (such as cyclohexylamine and dicyclohexylamine) and an aromatic monoamine (such as aniline, toluidine, diphenylamine and naphthylamine). In the present invention, a monocarboxylic acid is preferred as the terminal blocking agent and, among the above exemplifications, acetic acid and benzoic acid are preferred.

A concentration of salt in the aqueous raw material solution varies depending upon a type of the polyamide and is not particularly limited. In general, it is preferred to be 30 to 90% by mass. When the salt concentration exceeds 90% by mass, the salt may be separated by a slight variation of temperature and may clog pipes. In addition, it is necessary to increase a solubility of the salt, and thus it is necessary to adopt an equipment which is resistant to high temperature and high pressure whereby that is not advantageous in terms of the cost. On the other hand, when the salt concentration is less than 30% by mass, an amount of water evaporated after the initial polymerization step becomes abundant whereby that is disadvantageous in terms of energy and that causes a cost increase due to decrease in productivity. A desirable salt concentration is 35 to 85% by mass.

Preparation of the aqueous salt solution is usually conducted at a temperature range of 60 to 180°C and a pressure range of 0 to 1 MPa though they vary depending upon the polyamide type and the salt concentration. When the temperature exceeds 180°C or when the pressure exceeds 1 MPa, it is necessary to adopt the equipment which is resistant to high temperature and high pressure whereby the equipment cost increases and that is disadvantageous. On the contrary, when the temperature is lower than 60°C or the pressure is lower than 0 MPa, not only there happens a trouble such as clogging of the pipes by separation of the salt but also it is difficult to make the salt concentration high resulting in the decrease in productivity. A desirable condition is that the temperature is 70 to 170°C and that the pressure is 0.05 to 0.8 MPa, and a more desirable condition is that the temperature is 75 to 165°C and that the pressure is 0.1 to 0.6 MPa.

As to a storage tank for the aqueous salt solution, there is basically no limitation as far as the salt does not separate. The condition for preparing the aqueous salt solution can be applied just as it is.

The aqueous salt solution prepared as such can be continuously supplied to the amidation step by a supplying pump in the raw material introduction step. The supplying pump used here should have excellent quantitative-supply capability. Variation of supplying amount results in variation of the amidation step, which results in a polyamide exhibiting large deviation of the relative viscosity (RV) and thus unstable quality. In this sense, a plunger pump which has excellent quantitative-supply capability is recommended as the supplying pump.

A concentration of environmental oxygen during preparation of the aqueous solution of the raw materials greatly affects the color tone of the resulting polyamide. There is no problem as far as the environmental oxygen concentration during preparation of the aqueous solution of the raw materials is 10 ppm or less. When the environmental oxygen concentration exceeds 10 ppm, there is a tendency that yellowness of the resulting polyamide becomes strong and thus quality of the product becomes inferior. On the other hand, a lower limit of the environmental oxygen concentration is not particularly defined and, for example, that is 0.05 ppm or more. In the production of the polyamide, there is no problem at all when the environmental oxygen concentration is less than 0.05 ppm. In the meantime, for achieving less than 0.05 ppm, a step of removing oxygen is just unnecessarily troublesome. In addition, such extremely low environmental oxygen concentration rarely leads to a further improvement of other physical properties such as color tone. A desirable range of the environmental oxygen condition is 0.05 ppm or more and 9 ppm or less, and a more desirable range of the environmental oxygen condition is 0.05 ppm or more and 8 ppm or less.

In the present invention, the raw materials may be supplied to a preparation tank (melting tank or raw material salt forming tank) wherefrom oxygen has been previously removed to make the environmental oxygen concentration 10 ppm or less). Alternatively, the raw materials may be poured into the preparation tank (melting tank or raw material salt forming tank) followed by removing the oxygen whereby the environmental oxygen concentration in the preparation tank is lowered to 10 ppm or less. Both means may be jointly conducted. Which of those choices is selected may be determined in view of the equipment or the operation. It is also preferred that the oxygen concentration in the storing tank is lowered to 10 ppm or less.

As to a method for removing oxygen, there may be exemplified a vacuum substitution method, a pressurized substitution method and a combination thereof. A degree of vacuum or a degree of pressurization to be applied to the substitution as well as a number of substitution time may be selected so that the desired oxygen concentration can be achieved most efficiently.

(2) Raw material introduction step

The aqueous salt solution prepared in the raw material preparation step is continuously introduced into an inlet of the tubular reactor for the amidation step by a supplying pump through a pipe path.

(3) Amidation step

In the amidation step, the aqueous salt solution continuously introduced to the inlet of the tubular reactor is allowed to pass through the tubular reactor to conduct an amidation whereby a reaction mixture containing an amidated product having a low polymerization degree and condensed water is obtained. In the tubular reactor, separation and removal of water are not conducted.

As to the tubular reactor, it is preferred that L/D is 50 or more, wherein D (mm) is an inner diameter of the tube, and wherein L (mm) is a length of the tube. The tubular reactor has such advantages, in view of its structure, that a liquid surface control is not necessary, a plug flow property is high, a pressure resistance is excellent, and an equipment cost is low. When L/D is less than 50, a retention time of the reaction mixture flow is short and thus a rising degree of the relative viscosity (RV) is small in case L is small while, in case D is large, the plug flow property is small and a distribution in the retention time is resulted whereby desired functions cannot be achieved. Although an upper limit of L/D is not particularly defined, it is about 3000 when the retention time and the rising degree of the relative viscosity (RV) are taken into consideration. A lower limit of L/D is preferred to be 60 or more and more preferred to be 80 or more. An upper limit of L/D is preferred to be 2000 or less and more preferred to be 1000 or less. In addition, a lower limit of L is preferred to be 3 m or more and more preferred to be 5 m or more. An upper limit of L is preferred to be 50 m or less and more preferred to be 30 m or less.

Reaction conditions vary depending upon a structure of the polyamide and a desired degree of polymerization. For example, an inner temperature is 110 to 310°C, an inner pressure is 0 to 5 MPa and an average retention time of the reaction mixture in the tube is 10 to 120 minutes. The polymerization degree of the amidated product can be controlled by the inner temperature, the inner pressure and the average retention time.

When the average retention time is shorter than 10 minutes, the polymerization degree of the amidated product having the low polymerization degree becomes low. As a result thereof, the diamine ingredient is apt to fly during the polycondensation step whereby the adjustment of the terminal group becomes difficult. On the other hand, when the average retention time is longer than 120 minutes, the amidation reaches the equilibrium and thus the RV does not rise any more while the thermal deterioration still proceeds. A desirable average retention time is 12 to 110 minutes, and a more desirable average retention time is 15 to 100 minutes. The average retention time can be controlled by adjusting the inner diameter D and the length L of the tube of the tubular reactor or by changing the supplying amount of row materials.

It is preferred that, between the inlet and the outlet of the tubular reactor, the relative viscosity (RV) of the reaction mixture rises to an extent of 0.05 to 0.6 as a result of the polycondensation reaction in the amidation step. When the rise in RV is smaller than 0.05, the diamine ingredient is apt to fly during the polycondensation step whereby the adjustment of the terminal group becomes difficult. On the contrary, when the rise in RV is more than 0.6, the thermal deterioration is apt to proceed due to an affection of the coexisting condensed water (condensed water and water used for salt formation in the case of the salt forming method) . Further, the reaction mixture wherein the viscosity rose too much causes clogging of the pipes whereby it may badly affect the operation. A desirable rise in RV in the amidation reaction is 0.15 to 0.5, and a more desirable rise in RV in the amidation reaction is 0.2 to 0.4.

(4) Polycondensation step

As to the reaction condition in the initial polymerization step, the inner pressure is 0 to 5 MPa, the average retention time is 10 to 150 minutes, and the inner temperature is decided according to Flory's formula for melting point depression by residual water rate of the reactor. A desirable reaction condition is that the inner temperature is 230 to 285°C, that the inner pressure is 0.5 to 4.5 MPa, and that the average retention time is 15 to 140 minutes. A more desirable reaction condition is that the inner temperature is 235 to 280°C, that the inner pressure is 1.0 to 4.0 MPa, and that the average retention time is 20 to 130 minutes. When the reaction condition is out of the lower limit of the above range, the resulting polymerization degree is too low or the resin is solidified in the reactor. When the reaction condition is out of the upper limit of the above range, decomposition of the P3 ingredient or side reaction jointly occur and the amount of P3 becomes less than 30 ppm whereby that is disadvantageous in terms of resistance to thermal yellowish denaturation and of gelling characteristics.

(5) Solid phase polymerization step

The solid phase polymerization in the present invention is a step wherein the polymerization reaction is carried out *in vacuo* or in a nitrogen stream at any temperature within such a range that the semi-aromatic polyamide resin is not melted. Although there is no particular limitation for the equipment for carrying out the solid phase polymerization, a blender and a vacuum drier may be exemplified. A desirable reaction condition is that the inner temperature is 200 to 260°C and the inner pressure is 0.7 kPa or less. A more desirable reaction condition is that the inner temperature is 210

to 250°C and the inner pressure is 0.4 kPa or less.

It is possible that the polyamide prepolymer obtained in the polycondensation step of the present invention is subjected to a melt polymerization using a biaxial extruder so as to thicken to the predetermined RV. However, the decomposition of the P3 ingredient or side reaction jointly occurs due to the thermal history during melting and that is disadvantageous in terms of the resistance to thermal yellowish denaturation and the gelling characteristics. Further, low-molecular substances such as oligomer remain in the semi-aromatic polyamide resin and that is unsuitable in view of the outgassing during the melt molding in the latter step.

The semi-aromatic polyamide resin of the present invention is used particularly preferably in the molding application, and a molded product can be manufactured therefrom. When the molded product is produced from the semi-aromatic polyamide resin of the present invention or from a composition containing the semi-aromatic polyamide resin of the present invention, a common molding method may be used. As to the molding method, there may be exemplified an injection molding, an extrusion molding, a blow molding, and a thermal melt molding method such as a sintered molding.

Examples

The present invention will now be specifically illustrated by way of the following Examples though the present invention shall not be limited to those Examples.

(1) Outgassing

A polyamide resin (3 mg) was weighed. An amount of gas generated under He of 330°C for 20 minutes was measured using thermal decomposition GC/MS (PY-2020iD manufactured by Shimadzu). The measured amount was converted into a quantitative amount using a cyclic tetramer of dimethylsiloxan as a standard substance. Column: Rxi-5ms; pressure at injection inlet: 80 kPa; split ratio: 30; column oven temperature: 40°C (2 minutes) to 300°C (15 minutes); temperature-rising rate: 10 minutes/°C; mass measurement range: m/z 30 to 550.

(2) RV

A sample (0.25 g) was dissolved in 25 ml of 96% sulfuric acid to prepare a solution. This solution (10 ml) was placed into an Ostwald' s viscosity tube and measured at 20°C. RV was determined from the following formula.

$$RV = t/t_0$$

(to: dropping seconds of the solvent; t: dropping seconds of the sample solution)

(3) AEG, CEG, EC and composition

A semi-aromatic polyamide resin (20 mg) was dissolved in 0.6 ml of a mixed solvent of chloroform deuteride ($CDCl_3$) and hexafluoroisopropanol (HFIP) (1/1 by volume ratio) to prepare a solution. Heavy formic acid was dropped into this solution. After that, $^1$H-NMR analysis was conducted using a 500-MHz Fourier transform nuclear magnetic resonance device (AVANCE 500 manufactured by Bruker). AEG, CEG, EC and composition were determined from its integral ratio.

(4) Melting point

A sample (5 mg) was placed in a sample pan made of aluminum and tightly sealed. Measurement was conducted by heating the sample pan up to 350°C at a temperature-rising rate of 20°C/minute using a differential scanning calorimeter (DSC) (DSC-Q100 manufactured by T. A. Instrument Japan). The maximum peak temperature of heat of fusion was determined as the melting point of crystals.

(5) Quantitative determination of a P compound

A sample was made into a solution by an yttrium nitrate method. This solution was analyzed by an ICP (SPECTROBLUE manufactured by Hitachi High-Tech Science). To be more specific, a sample (0.1 g) was weighed in a platinum crucible, and 5 mL of a 5% ethanolic solution of yttrium nitrate was added to conduct an incineration treatment with a nitrate. To an incinerated residue was added 20 mL of 1.2N hydrochloric acid, and left for one night in an immersed state. After a complete dissolution was confirmed, the solution was applied to the ICP emission analysis device to

measure an emission strength of phosphorus at 214 nm wavelength and a concentration of phosphorus in the solution was quantified. After that, this phosphorus concentration was converted to an amount of phosphorus in the sample.

(6) Structure analysis of the P compound

A sample (340 to 350 mg) was dissolved in 2.5 ml of a mixed solvent of chloroform deuteride ($CDCl_3$) and hexafluoroisopropanol (HFIP) (1/1 by volume ratio) at a room temperature to prepare a solution. To a polyamide resin was added tri(t-butylphenyl)-phosphoric acid (hereinafter, it will be abbreviated as TBPPA) in 100 ppm in terms of P and, further, 0.1 ml of trifluoroacetic acid was added thereto at the room temperature. After 30 minutes, a $^{31}$P-NMR analysis was conducted using a Fourier transform nuclear magnetic resonance device (AVANCE 500 manufactured by Bruker). Analytic conditions are as follows. $^{31}$P resonance frequency: 202.5 MHz; flip angle of detected pulse: 45°; incorporation time of data: 1.5 seconds; retardation time: 1.0 second; cumulative calculation numbers: 1000 to 20000 times; measuring temperature: room temperature; proton complete decoupling: present. Molar ratio of the phosphorus compound represented by the structure formula (P1) to the phosphorus compound represented by the structure formula (P2) was determined by the resulting integral ratio.

(7) Calculation of P3

An amount of each P1 and P2 was calculated from the amount of P compound determined by the above ICP and from the molar ratio of P1 and P2 determined by the $^{31}$P-NMR. Their sum was defined as P3.

(8) ΔCo-b

A polyamide resin (10 g) was refrigerated/frozen by liquid nitrogen. Then, it was ground at 15000 rpm for 3 minutes using a grinding machine (ABLOLUTE 3 manufactured by Osaka Chemical) to prepare powder. Co-b of the powdered resin was measured using a color-meter (ZE 2000 manufactured by Nippon Denshokusha). After that, the powder was thinly spread on a culture dish. The culture dish was placed in a gear oven (GEER OVEN GHPS-222 manufactured by TABAI) heated at 260°C and subjected to a thermal treatment in the air for 10 minutes. Co-b value of the powder resin after the thermal treatment was measured. A difference between before and after the thermal treatment was defined as ΔCo-b.

(9) Gelation time

A polyamide resin (3 g) was placed in an ampoule tube, and subjected to a thermal treatment in an inert oven (DN4101 manufactured by TAMATO) heated at 330°C for a predetermined period under 10 liters/minute of nitrogen stream. The thermally treated resin (0.25 g) was dissolved in 25 ml of 96% sulfuric acid. A thermal treatment time at which an insoluble matter appeared was defined as the gelation time.

(10) Weld strength

An injection molding machine (J130-ADS, manufactured by The Japan Steel Works, Ltd.) was used. A cylinder temperature was set to be (the melting point of the resin) + 20°C, while a mold temperature was set to be 140°C. A test piece for evaluation as shown in Fig. 1 was prepared by injection molding. Fig. 1(A) shows a top view of the test piece, while Fig. 1(B) shows a side view of the test piece. Bending strength of a weld part formed in the central part of the prepared test piece was measured according to ISO178, and evaluated. The weld strength was judged by the following criterion.

∞: more than 120 MPa
◦: more than 100 MPa and 120 MPa or less
×: 100 MPa or less

Example 1

Into a 50-liter autoclave were charged 8.66 kg (74.5 moles) of 1,6-hexamethylenediamine, 12.24 kg (73.7 moles) of terephthalic acid, 7.99 kg (39.7 moles) of 11-aminoundecanoic acid, 30.4 g of sodium hypophosphite as a catalyst, 95.8 g (1.6 moles) of acetic acid as a terminal blocking agent, and 16.20 kg of ion-exchange water which was bubbled with nitrogen so that a concentration of dissolved oxygen was adjusted to 0.5 ppm or less. Pressurization was conducted from ordinary pressure up to 0.05 MPa with $N_2$ followed by discharging the pressure to return to ordinary

pressure. This operation was repeated for ten times for conducting a substitution with $N_2$. After that, the mixture was uniformly dissolved with stirring at 135°C and 0.3 MPa. After that, the dissolved solution was continuously supplied to a heating pipe using a liquid feeding pump, and heated up to 260°C in the heating pipe. Heating was continued for 0.5 hour. After that, the reaction mixture was supplied to a pressure reactor. The reaction mixture was heated at 270°C while a part of water was distilled so as to maintain an inner pressure of the reactor at 3 MPa whereby a low condensate was obtained. After that, this low condensate was taken out in the air to a container of ordinary temperature and ordinary pressure. After that, the low condensate was dried under an environment of 70°C and 0.07 kPa or lower vacuum degree using a vacuum drier. After the drying, the low condensate was reacted for 10 hours under an environment of 200°C and 0.07 kPa vacuum degree using a blender (volume: 0.1 $m^3$) to give a semi-aromatic polyamide resin. Details of characteristic properties of the resulting semi-aromatic polyamide resin are shown in Table 1.

Example 2

The same operation as in Example 1 was conducted until the vacuum drying whereby a low condensate was obtained. Then, the low condensate was reacted for 10 hours under an environment of 210°C and 0.07 kPa vacuum degree using a blender (volume: 0.1 $m^3$) to give a semi-aromatic polyamide resin.

Example 3

The same operation as in Example 1 was conducted until the vacuum drying except that the compounding amount of 1,6-hexamethylenediamine was changed to 8.94 kg (76.9 moles) and the compounding amount of acetic acid as the terminal blocking agent was changed to 159.4 g (2.7 moles) whereby a low condensate was obtained. Then, the low condensate was reacted for 6 hours under an environment of 225°C and 0.07 kPa vacuum degree using a blender (volume: 0.1 $m^3$) to give a semi-aromatic polyamide resin.

Example 4

The same operation as in Example 1 was conducted until the vacuum drying except that the compounding amount of 1, 6-hexamethylenediamine was changed to 7.20 kg (62.0 moles), the compounding amount of terephthalic acid was changed to 9.89 kg (59.5 moles), the compounding amount of 11-aminoundecanoic acid was changed to 11. 99 kg (59.6 moles), and the compounding amount of acetic acid as the terminal blocking agent was changed to 150.4 g (2.5 moles) whereby a low condensate was obtained. Then, the low condensate was reacted for 12 hours under an environment of 235°C and 0.07 kPa vacuum degree using a blender (volume: 0.1 $m^3$) to give a semi-aromatic polyamide resin.

Example 5

The same operation as in Example 1 was conducted until the vacuum drying except that the compounding amount of 1, 6-hexamethylenediamine was changed to 10.38 kg (89.3 moles), the compounding amount of terephthalic acid was changed to 14.38 kg (86.6 moles), the compounding amount of 11-aminoundecanoic acid was changed to 4.36 kg (21.7 moles), and the compounding amount of acetic acid as the terminal blocking agent was changed to 118.9 g (2.0 moles) whereby a low condensate was obtained. Then, the low condensate was reacted for 11 hours under an environment of 235°C and 0.07 kPa vacuum degree using a blender (volume: 0.1 $m^3$) to give a semi-aromatic polyamide resin.

Example 6

The same operation as in Example 1 was conducted until the vacuum drying except that the compounding amount of 1,6-hexamethylenediamine was changed to 8.91 kg (76.7 moles) and 344.7 g (2.8 moles) of benzoic acid was used as the terminal blocking agent instead of acetic acid whereby a low condensate was obtained. Then, the low condensate was reacted for 8 hours under an environment of 230°C and 0.07 kPa vacuum degree using a blender (volume: 0.1 $m^3$) to give a semi-aromatic polyamide resin.

Example 7

The same operation as in Example 1 was conducted until the vacuum drying except that the compounding amount of 1,6-hexamethylenediamine was changed to 8.75 kg (75.3 moles) and the compounding amount of acetic acid as the terminal blocking agent was changed to 73.8 g (1.2 moles) whereby a low condensate was obtained. Then, the

low condensate was reacted for 12 hours under an environment of 210°C and 0.07 kPa vacuum degree using a blender (volume: 0.1m$^3$) to give a semi-aromatic polyamide resin.

Example 8

The same operation as in Example 1 was conducted until the vacuum drying except that the compounding amount of 1,6-hexamethylenediamine was changed to 8.84 kg (76.1 moles) and the compounding amount of acetic acid as the terminal blocking agent was changed to 127.6 g (2.1 moles) whereby a low condensate was obtained. Then, the low condensate was reacted for 10 hours under an environment of 210°C and 0.07 kPa vacuum degree using a blender (volume: 0.1 m$^3$) to give a semi-aromatic polyamide resin.

Comparative Example 1

The same operation as in Example 1 was conducted until the vacuum drying except that the compounding amount of 1,6-hexamethylenediamine was changed to 8.98 kg (77.3 moles) and the compounding amount of acetic acid as the terminal blocking agent was changed to 217.3 g (3.6 moles) whereby a low condensate was obtained. Then, the low condensate was reacted for 8 hours under an environment of 235°C and 0.07 kPa vacuum degree using a blender (volume: 0.1 m$^3$) to give a semi-aromatic polyamide resin.

Comparative Example 2

The same operation as in Example 1 was conducted until the vacuum drying except that the compounding amount of 1,6-hexamethylenediamine was changed to 9.04 kg (77.8 moles) and the compounding amount of acetic acid as the terminal blocking agent was changed to 233.2 g (3.9 moles) whereby a low condensate was obtained. Then, the low condensate was reacted for 8 hours under an environment of 240°C and 0.07 kPa vacuum degree using a blender (volume: 0.1 m$^3$) to give a semi-aromatic polyamide resin.

Comparative Example 3

The same operation as in Example 1 was conducted until the vacuum drying except that the compounding amount of 1,6-hexamethylenediamine was changed to 8.78 kg (75.6 moles) and the compounding amount of acetic acid as the terminal blocking agent was changed to 75.7 g (1.3 moles) whereby a low condensate was obtained. Then, the low condensate was reacted for 5 hours under an environment of 200°C and 0.07 kPa vacuum degree using a blender (volume: 0.1 m$^3$) to give a semi-aromatic polyamide resin.

Comparative Example 4

The same operation as in Example 1 was conducted until the vacuum drying except that the compounding amount of 1,6-hexamethylenediamine was changed to 8.65 kg (74.4 moles) and the compounding amount of acetic acid as the terminal blocking agent was changed to 145.4 g (2.4 moles) whereby a low condensate was obtained. Then, the low condensate was reacted for 6 hours under an environment of 235°C and 0.07 kPa vacuum degree using a blender (volume: 0.1 m$^3$) to give a semi-aromatic polyamide resin.

Comparative Example 5

The same operation as in Example 1 was conducted until the vacuum drying except that the compounding amount of 1,6-hexamethylenediamine was changed to 9.04 kg (77.8 moles) and the compounding amount of acetic acid as the terminal blocking agent was changed to 123.5 g (2.1 moles) whereby a low condensate was obtained. Then, the low condensate was reacted for 6 hours under an environment of 235°C and 0.07 kPa vacuum degree using a blender (volume: 0.1 m$^3$) to give a semi-aromatic polyamide resin.

Comparative Example 6

The same operation as in Example 1 was conducted until the vacuum drying except that the compounding amount of 1,6-hexamethylenediamine was changed to 8.77 kg (75.5 moles) and the compounding amount of acetic acid as the terminal blocking agent was changed to 81.7 g (1.4 moles) whereby a low condensate was obtained. Then, the low condensate was reacted for 18 hours under an environment of 210°C and 0.07 kPa vacuum degree using a blender (volume: 0.1m$^3$) to give a semi-aromatic polyamide resin.

Comparative Example 7

The same operation as in Example 1 was conducted until the vacuum drying except that the compounding amount of 1,6-hexamethylenediamine was changed to 9.10 kg (78.3 moles) and the compounding amount of acetic acid as the terminal blocking agent was changed to 279.2 g (4.6 moles) whereby a low condensate was obtained. Then, the low condensate was reacted for 8 hours under an environment of 240°C and 0.07 kPa vacuum degree using a blender (volume: 0.1 $m^3$) to give a semi-aromatic polyamide resin.

Comparative Example 8

The same operation as in Example 1 was conducted until the vacuum drying except that the compounding amount of 1,6-hexamethylenediamine was changed to 8.50 kg (73.1 moles) and the compounding amount of acetic acid as the terminal blocking agent was changed to 45.8 g (0.7 mole) whereby a low condensate was obtained. Then, the low condensate was reacted for 10 hours under an environment of 200°C and 0.07 kPa vacuum degree using a blender (volume: 0.1 $m^3$) to give a semi-aromatic polyamide resin.

Details of characteristic properties of the semi-aromatic polyamide resin prepared in each of Examples and Comparative Examples are shown in Table 1.

[Table 1]

| | RV | AEG | CEG | terminal blocking EC | | formula (II) | formula (III) | formula (IV) | composition (mol%) | | melting point | P (ppm) | | outgassing | ΔCo -b | gelation time | weld strength | |
|---|---|---|---|---|---|---|---|---|---|---|---|---|---|---|---|---|---|---|
| | - | eq/t | eq/t | type | eq/t | eq/t | - | - | 6T | 11 | °C | total amount | P3 | ppm | - | hr | MPa | judgement |
| Example 1 | 2.67 | 23 | 70 | AcOH | 48 | 93 | 0.66 | 0.33 | 65 | 35 | 315 | 300 | 64 | 380 | 6.1 | 2 | 163 | ◦◦ |
| Example 2 | 3.08 | 9 | 55 | AcOH | 48 | 64 | 0.57 | 0.16 | 65 | 35 | 315 | 310 | 69 | 377 | 5.8 | 3 | 151 | ◦◦ |
| Example 3 | 2.84 | 31 | 27 | AcOH | 80 | 58 | 0.42 | 1.15 | 65 | 35 | 315 | 305 | 71 | 331 | 5.4 | 4 | 116 | ◦ |
| Example 4 | 3.48 | 14 | 12 | AcOH | 75 | 26 | 0.26 | 1.17 | 51 | 49 | 284 | 295 | 66 | 321 | 4.9 | 3 | 110 | ◦ |
| Example 5 | 3.31 | 20 | 26 | AcOH | 60 | 46 | 0.43 | 0.77 | 80 | 20 | 337 | 300 | 58 | 360 | 5.1 | 3 | 116 | ◦ |
| Example 6 | 2.99 | 16 | 24 | BA | 85 | 40 | 0.32 | 0.67 | 65 | 35 | 315 | 300 | 72 | 414 | 5.5 | 4 | 111 | ◦ |
| Example 7 | 3.45 | 27 | 37 | AcOH | 37 | 64 | 0.64 | 0.73 | 65 | 35 | 315 | 300 | 55 | 381 | 5.6 | 2 | 160 | ◦◦ |
| Example 8 | 2.93 | 28 | 37 | AcOH | 63 | 65 | 0.51 | 0.76 | 65 | 35 | 315 | 300 | 64 | 395 | 5.0 | 2 | 134 | ◦◦ |
| Comparative Example 1 | 2.48 | 23 | 35 | AcOH | 109 | 58 | 0.35 | 0.66 | 65 | 35 | 315 | 305 | 63 | 377 | 5.2 | 4 | 96 | × |
| Comparative Example 2 | 2.68 | 15 | 17 | AcOH | 117 | 32 | 0.21 | 0.88 | 65 | 35 | 315 | 300 | 61 | 312 | 5.0 | 5 | 88 | × |
| Comparative Example 3 | 2.65 | 55 | 57 | AcOH | 38 | 112 | 0.75 | 0.96 | 65 | 35 | 315 | 295 | 63 | 491 | 11.5 | 1 | 161 | ◦◦ |
| Comparative Example 4 | 2.78 | 0 | 63 | AcOH | 59 | 63 | 0.52 | 0 | 65 | 35 | 315 | 300 | 66 | 554 | 13.0 | 3 | 125 | ◦◦ |
| Comparative Example 5 | 2.66 | 71 | 17 | AcOH | 62 | 88 | 0.59 | 4.18 | 65 | 35 | 315 | 300 | 65 | 414 | 12.0 | 2 | 151 | ◦◦ |
| Comparative Example 6 | 4.03 | 16 | 24 | AcOH | 41 | 40 | 0.49 | 0.67 | 65 | 35 | 315 | 300 | 51 | 388 | 5.8 | 1 | 119 | ◦ |
| Comparative Example 7 | 2.66 | 1 | 8 | AcOH | 140 | 9 | 0.06 | 0.13 | 65 | 35 | 315 | 300 | 48 | 398 | 6.8 | 5 | 83 | × |
| Comparative Example 8 | 2.79 | 22 | 93 | AcOH | 23 | 115 | 0.83 | 0.24 | 65 | 35 | 315 | 300 | 59 | 412 | 11.8 | 1 | 169 | ◦◦ |

In the table, AcOH stands for acetic acid and BA stands for benzoic acid.
In Examples 1-8, it is clear that all properties are satisfactory.
In Comparative Example 1, RV < 2.65 whereby the weld strength is low.
In Comparative Example 2, (AEG + CEG) / (AEG + CEG + EC) < 0.25. Accordingly, the amount of the blocked terminals is large whereby viscosity decreases during the molding. As a result, the weld strength is low.
In Comparative Example 3, (AEG + CEG) > 110 eq/t. Accordingly, the amount of the blocked terminals is small, and the amount of residual AEG and CEG is abundant. As a result, the resin is inferior in the resistance to coloration in yellow due to heat, and is apt to be gelled.
In Comparative Example 4, AEG is 0 eq/t whereby the outgassing components derived from the terminal blocking increase. Accordingly, coloration reaction due to the acid components happens. As a result, the resin is inferior in the resistance to coloration in yellow due to heat.
In Comparative Example 5, AEG/CEG > 3.5 whereby the amount of residual AEG is abundant. As a result, the resin is inferior in the resistance to coloration in yellow due to heat.
In Comparative Example 6, RV > 3.50 whereby the fluidity during the molding is inferior. Also, the resin is apt to be gelled.
In Comparative Example 7, AEG + CEG < 10 eq/t whereby (AEG + CEG) / (AEG + CEG + EC) < 0.25 eq/t. Accordingly, the amount of the blocked terminals is large whereby viscosity decreases during the molding. As a result, the weld strength is low.
In Comparative Example 8, (AEG + CEG) / (AEG + CEG + EC) > 0.75. As a result, the resin is apt to be gelled, and is inferior in the resistance to coloration in yellow due to heat.

Industrial Applicability

According to the present invention, it is possible to provide a semi-aromatic polyamide resin which is excellent in heat resistance and heat discoloration resistance, which can suppress a mold staining due to outgassing during melt molding, which is excellent in melt fluidity, gelation characteristics and mechanical properties, and which is suitable for a resin composition for molded products such as car parts, bicycle parts and electric/electronic parts. Consequently, the present invention is expected to greatly contribute to the industry.

## Claims

1. A semi-aromatic polyamide resin wherein the resin contains a constituent unit obtained from hexamethylenediamine and terephthalic acid and a constituent unit obtained from 11-aminoundecanoic acid or undecane lactam, wherein a relative viscosity (RV) of the semi-aromatic polyamide resin is within a range of the following formula (I), and wherein a relationship among a concentration of terminal amino groups (AEG), a concentration of terminal carboxyl groups (CEG) and a concentration of terminal amino groups blocked by a monocarboxylic acid (EC) satisfies the following formulae (II) to (IV).

$$2.65 \leq RV \leq 3.50 \ldots (I)$$

$$10\ eq/t \leq AEG + CEG \leq 110\ eq/t \ldots (II)$$

$$0.25 \leq (AEG + CEG) / (AEG + CEG + EC) \leq 0.75 \ldots (III)$$

$$0.1 \leq AEG/CEG \leq 3.5 \ldots (IV)$$

2. The semi-aromatic polyamide resin according to claim 1, wherein the constituent unit obtained from hexamethylenediamine and terephthalic acid occupies 50 to 75% by mole, and the constituent unit obtained from 11-aminoundecanoic acid or undecane lactam occupies 50 to 25% by mole, and wherein a melting point of the semi-aromatic polyamide resin is 270 to 330°C.

3. The semi-aromatic polyamide resin according to claim 1 or 2, wherein a sum (P3) of an amount of phosphorus atoms derived from phosphorus compounds detected in the semi-aromatic polyamide resin as having a structure

represented by the following structural formula (P1) or (P2) is 30 ppm or more, and wherein a percentage of P3 to an amount of total phosphorus atoms remaining in the semi-aromatic polyamide resin is 10% or more.

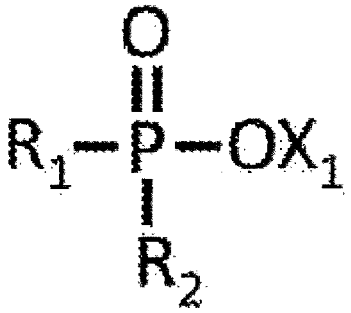

···(P1)

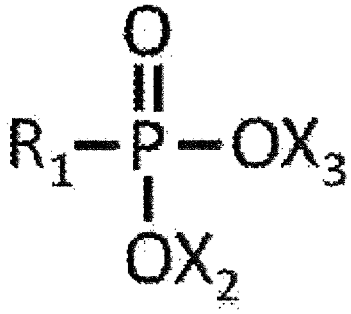

···(P2)

(In the formulae, $R_1$ and $R_2$ each is hydrogen, alkyl group, aryl group, cycloalkyl group or arylalkyl group; $X_1$,$X_2$ and $X_3$ each is hydrogen, alkyl group, aryl group, cycloalkyl group, arylalkyl group, alkali metal or alkali earth metal; and one member among $X_1$, $X_2$ and $X_3$ and one member between $R_1$ and $R_2$ in the formulae may be bonded with each other to form a ring structure.)

**4.** The semi-aromatic polyamide resin according to any of claims 1 to 3, wherein an amount of gas (outgassing) generated when the semi-aromatic polyamide resin is thermally decomposed at 330°C for 20 minutes is 500 ppm or less.

**5.** A method for producing the semi-aromatic polyamide resin mentioned in any of claims 1 to 4, comprising the steps of:

preparing an aqueous solution of raw materials constituting the semi-aromatic polyamide resin;
continuously introducing the aqueous solution of the raw materials into a tubular reactor (raw material introduction step);
allowing the introduced raw materials to pass through the tubular reactor to conduct an amidation whereby a reaction mixture containing an amidation product and condensed water is obtained (amidation step);
conducting a melt polymerization by introducing the reaction mixture into a continuous reactor which allows a separation and removal of water; and
conducting a solid phase polymerization *in vacuo* or in a nitrogen stream.

[Fig. 1]

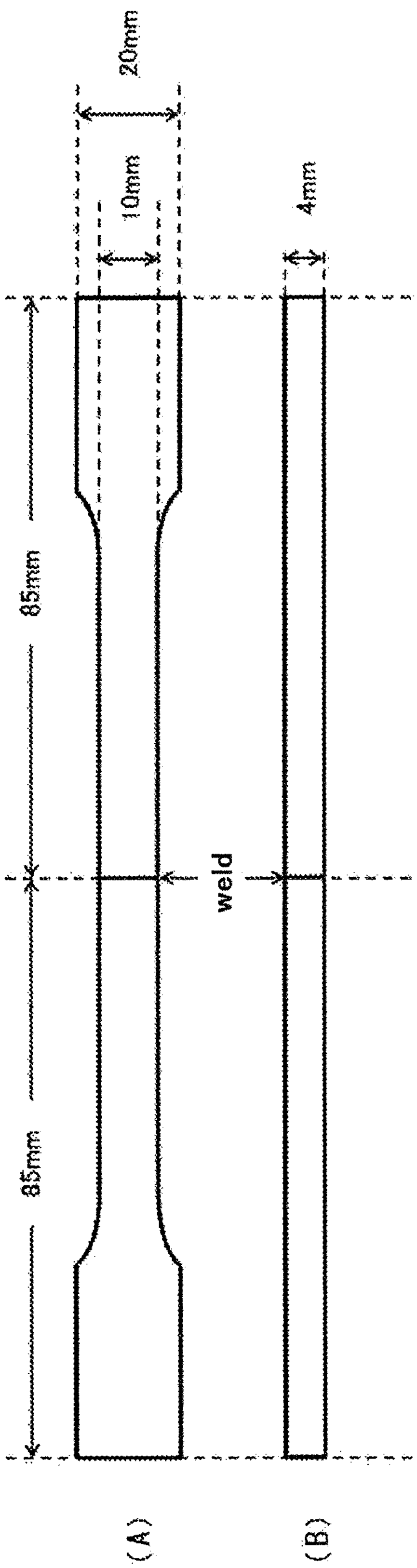

| INTERNATIONAL SEARCH REPORT | International application No. PCT/JP2019/048666 |
|---|---|

A. CLASSIFICATION OF SUBJECT MATTER
C08G 69/36(2006.01)i
FI: C08G69/36

According to International Patent Classification (IPC) or to both national classification and IPC

B. FIELDS SEARCHED

Minimum documentation searched (classification system followed by classification symbols)
C08G69/36

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X | WO 2012/147849 A1 (TOYOBO BOSEKI KABUSHIKI KAISHA) 01.11.2012 (2012-11-01) example 5, table 1, paragraphs [0035], [0055]-[0056] | 1-5 |
| A | WO 2017/217447 A1 (TOYOBO CO., LTD.) 21.12.2017 (2017-12-21) | 1-5 |
| A | CN 104804429 A (KINGFA SCI. & TECH. CO., LTD.) 29.07.2015 (2015-07-29) | 1-5 |
| A | JP 2011-530614 A (ARKEMA FRANCE) 22.12.2011 (2011-12-22) | 1-5 |
| P, X | WO 2019/189145 A1 (TOYOBO CO., LTD.) 03.10.2019 (2019-10-03) claims, example 4, table 1 | 1-5 |

☐ Further documents are listed in the continuation of Box C. ☒ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 19 February 2020 (19.02.2020) | 03 March 2020 (03.03.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2019/048666

| Patent Documents referred in the Report | Publication Date | Patent Family | Publication Date |
|---|---|---|---|
| WO 2012/147849 A1 | 01 Nov. 2012 | TW 201302874 A | |
| WO 2017/217447 A1 | 21 Dec. 2017 | (Family: none) | |
| CN 104804429 A | 29 Jul. 2015 | (Family: none) | |
| JP 2011-530614 A | 22 Dec. 2011 | US 2011/0206881 A1<br>WO 2010/015785 A1<br>EP 2310438 A1<br>FR 2934864 A<br>KR 10-2011-0041503 A<br>CN 102149748 A<br>RU 2011108471 A | |
| WO 2019/189145 A1 | 03 Oct. 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2011052464 A
- WO 2017077901 A
- JP 2007092053 A